(19) Europäisches Patentamt
European Patent Office
Office européen des brevets

(11) EP 1 757 560 A2

(12) EUROPÄISCHE PATENTANMELDUNG

(43) Veröffentlichungstag:
**28.02.2007 Patentblatt 2007/09**

(51) Int Cl.:
***C01F 17/00*** *(2006.01)* ***C09K 3/14*** *(2006.01)*

(21) Anmeldenummer: **06117202.9**

(22) Anmeldetag: **14.07.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **12.08.2005 DE 102005038136**

(71) Anmelder: **Degussa GmbH**
**D-45764 Marl (DE)**

(72) Erfinder:
- **Katusic, Stipan**
  **65779, Kelkheim (DE)**
- **Kröll, Michael**
  **63571, Gelnhausen (DE)**
- **Krämer, Michael**
  **61137, Schöneck-Kilianstädten (DE)**
- **Heberer, Stefan**
  **63571, Gelnhausen (DE)**
- **Staab, Edwin**
  **63826, Geiselbach (DE)**
- **Michael, Günther**
  **63791, Karlstein (DE)**

# (54) Ceroxid-Pulver und Ceroxid-Dispersion

(57) Carbonatgruppen aufweisendes Ceroxid-Pulver aus kristallinen Primärpartikeln, die Ceroxid und auf ihrer Oberfläche und in einer oberflächennahen Schicht Carbonatgruppen enthalten, wobei
- das Pulver eine BET-Oberfläche von 25 bis 150 $m^2/g$ besitzt,
- die Primärpartikel einen mittleren Durchmesser von 5 bis 50 nm aufweisen,
- die oberflächennahe Schicht der Primärpartikel eine Tiefe von ca. 5 nm aufweist,
- in der oberflächennahen Schicht die Carbonatkonzentration ausgehend von der Oberfläche, auf der die Carbonatkonzentration am höchsten ist, nach innen abnimmt,
- der von den Carbonatgruppen herrührende Kohlenstoffgehalt auf der Oberfläche 5 bis 50 Flächenprozent beträgt und in der oberflächennahen Schicht in einer Tiefe von ca. 5 nm 0 bis 30 Flächenprozent beträgt,
- der Gehalt an Ceroxid, gerechnet als $CeO_2$ und bezogen auf das Pulver, mindestens 99,5 Gew.-% beträgt und
- der Gehalt an Kohlenstoff, umfassend organischen und anorganischen Kohlenstoff, 0,01 bis 0,3 Gew.-%, bezogen auf das Pulver, beträgt.

Dieses Pulver enthaltende Dispersion.

EP 1 757 560 A2

## Beschreibung

Die Erfindung betrifft ein ceroxidbasierendes Pulver, dessen Herstellung und Verwendung. Die Erfindung betrifft weiterhin eine dieses Pulver enthaltende Dispersion.

Ceroxid ist ein wesentlicher Bestandteil von Katalysatoren. Weiterhin stellt Ceroxid ein wichtiges Material für das Polieren von Glas und elektronischen Bauteilen dar. Insbesondere im Bereich des chemisch-mechanischen Polierens gibt es in der Journal- und Patentliteratur zahlreiche Abhandlungen, die sich mit der Verbesserung der Eigenschaften von Ceroxid-Pulver als auch von Ceroxid-Dispersionen beschäftigen.

Gewöhnlich wird Ceroxid durch Calcinierung von Cerhydroxiden oder Cercarbonaten hergestellt. Die calcinierten Oxide werden dann vermahlen und gesiebt.

Weiterhin sind nasschemische Routen und Gasphasenprozesse bekannt. Ceroxid kann durch Hydrothermalsynthese, wie beispielsweise in US 5389352 beschrieben, hergestellt werden. Dabei werden Cer(III)-Salze unter Einfluss von Temperatur und Druck oxidativ in Ceroxid überführt, das in Form feiner Partikel auskristallisiert.

Von besonderem Interesse sind Gasphasenprozesse wie Spraypyrolyse-Methoden, bei denen ein Ceroxid-Precursor, gewöhnlich in der Form eines Aerosols, in einer Flamme oxidiert wird. Eine solche Methode ist in EP-A-1142830 beschrieben.

Pratsinis et al. beschreiben in J. Mater. Res., Vol. 17, Seiten 1356 - 1362 (2002) die Herstellung von Ceroxid-Pulver hoher Kristallinität durch Flammenspraypyrolyse von Ceracetatlösungen in Lösungsmittelgemischen aus Essigsäure, iso-Octan und 2-Butanol durch Oxidation mittels Sauerstoff in einer Sauerstoff-/Methan-Flamme. Das Lösungsmittelgemisch ist essentiell zur Herstellung eines von gröberen Partikeln freien Ceroxid-Pulvers.

In WO2004/005184A1 wird ein Verfahren zur Herstellung von Metalloxiden beansprucht, bei dem aus einer Lösung Tröpfchen erzeugt und diese in einer Flamme oxidiert werden. Die Lösung enthält mindestens ein Ausgangsmaterial und mindestens 60%, bezogen auf die gesamte Lösung, einer Carbonsäure als Lösungsmittel.

Aus WO01/36332A1 ist ein Verfahren zur Herstellung von Ceroxid, bestehend aus Grob- und Feinanteilen, bekannt. Dieses Verfahren offenbart das Verbrennen eines Aerosols eines Ceroxid-Vorläufers in einer Hochtemperaturzone von 700 bis 1100 K.

In DE-A-10251029 wird ein pyrogen hergestelltes Ceroxid-Pulver mit einen Grobanteil aus kristallinen, nicht aggregierten Partikeln mit einem mittleren Durchmesser zwischen 30 und 200 nm, einem Feinanteil in Form von Aggregaten aus feinkristallinen, verwachsenen Primärpartikeln mit einem mittleren Aggregatdurchmesser von 5 bis 50 nm und einer BET-Oberfläche von 15 bis 200 $m^2/g$ offenbart.

In EP-A-1506940 wird ein polykristallines Ceroxid-Pulver in Form von Aggregaten von Primärpartikeln mit einer spezifischen Oberfläche zwischen 70 und 150 $m^2/g$, einem mittleren Primärpartikeldurchmesser zwischen 5 und 20 nm und einem mittleren, projizierten Aggregatdurchmesser zwischen 20 und 100 nm und eine Dispersion enthaltend dieses Ceroxid-Pulver offenbart.

Weiterhin sind zahlreiche Dispersionen zum chemisch-mechanischen Polieren beschrieben, die Ceroxid enthalten.

In EP-A-1203801 wird eine wässerige Dispersion offenbart, die ceroxid-dotiertes, pyrogen hergestelltes Siliziumdioxid enthält, wobei das Ceroxid über ein Aerosol aus einer Cersalzlösung oder -suspension eingebracht wird, und die mittlere Teilchengröße in der Dispersion kleiner 100 nm ist.

In EP-A-133080 wird eine wässerige Dispersion offenbart, welche Partikel mit einem Kern aus dotiertem, pyrogen hergestelltem niedrigstrukturiertes Siliciumdioxid mit einer Ceroxidhülle enthält und eine mittlere Sekundärpartikelgrösse von 0,2 μm nicht überschreitet.

In DE-B-10342826 wird eine Dispersion von pyrogen hergestelltem Ceroxid offenbart, welche keine Teilchen größer als 1 μm aufweist.

In US 6827752 wird eine Ceroxid-Dispersion beansprucht, welche durch Polyacrylate stabilisiert ist.

In US6443811 wird eine Ceroxid-Dispersion in neutralem bis schwach basischen Milieu beansprucht, welche ein kationisches oberflächenaktives Mittel enthält.

In US6420269 wird eine Ceroxid-Dispersion mit einem pH-Wert im Bereich von 8 bis 12 beansprucht, welche ein Dispergiermittel, vorzugsweise ein wasserlösliches organisches Polymer, ein wasserlösliches anionisches oder nichtionisches oberflächenaktives Mittel oder ein wasserlösliches Amin enthält.

Nachteilig ist bei den Ceroxid-Dispersionen nach dem Stand der Technik, dass eine ausreichende Stabilität im neutralen bis schwach alkalischen Bereich nur in Gegenwart von Additiven erzielt werden kann.

Die Aufgabe der vorliegenden Erfindung bestand daher darin, eine ceroxidbasierende Dispersion bereitzustellen, die ohne zusätzliche Additive hinreichend stabil ist um im neutralen bis schwach alkalischen Bereich zum chemisch-mechanischen Polieren eingesetzt werden kann.

Eine weitere Aufgabe der Erfindung bestand darin ein ceroxidbasierendes Pulver als Grundlage für die Dispersion bereitzustellen. Eine weitere Aufgabe bestand in der Bereitstellung eines Verfahrens zur Herstellung dieses Pulvers.

Gegenstand der Erfindung ist ein Carbonatgruppen aufweisendes Ceroxid-Pulver aus kristallinen Primärpartikeln, die Ceroxid und auf ihrer Oberfläche und in einer oberflächennahen Schicht Carbonatgruppen enthalten, wobei

- das Pulver eine BET-Oberfläche von 25 bis 150 $m^2/g$ besitzt,
- die Primärpartikel einen mittleren Durchmesser von 5 bis 50 nm aufweisen,
- die oberflächennahe Schicht der Primärpartikel eine Tiefe von ca. 5 nm aufweist,
- in der oberflächennahen Schicht die Carbonatkonzentration, ausgehend von der Oberfläche, auf der die Carbonatkonzentration am höchsten ist, nach innen abnimmt,
- der von den Carbonatgruppen herrührende Kohlenstoffgehalt auf der Oberfläche 5 bis 50 Flächenprozent beträgt und in der oberflächennahen Schicht in einer Tiefe von ca. 5 nm 0 bis 30 Flächenprozent beträgt.
- der Gehalt an Ceroxid, gerechnet als $CeO_2$ und bezogen auf das Pulver, mindestens 99,5 Gew.-% beträgt und
- der Gehalt an Kohlenstoff, umfassend organischen und anorganischen Kohlenstoff, 0,01 bis 0,3 Gew.-%, bezogen auf das Pulver, beträgt.

Die Carbonatgruppen im erfindungsgemäßen Pulver können sowohl an der Oberfläche als auch in einer Tiefe bis ca. 5 nm nachgewiesen werden. Die Carbonatgruppen sind dabei chemisch gebunden und können beispielsweise wie in den Strukturen a-c angeordnet sein.

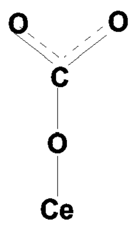

a

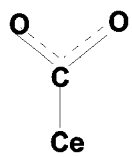

b

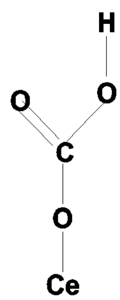

c

Die Carbonatgruppen können beispielsweise durch XPS/ESCA-Analyse nachgewiesen werden. Zum Nachweis der Carbonatgruppen in der oberflächennahen Schicht kann ein Teil der Oberfläche mittels Argonionenbeschuss abgetragen werden und die sich ergebende neue Oberfläche ebenfalls mittels XPS/ESCA (XPS = Röntgen-Photoelektronen-Spektroskopie; ESCA = Electron Spectroscopy for Chemical Analysis) analysiert werden.
Im erfindungsgemäßen Pulver können die Primärpartikel isoliert voneinander vorliegen oder aber mehr oder weniger stark aggregiert vorliegen. Vorzugsweise liegen die Primärpartiel weitestgehend aggregiert vor.
Das erfindungsgemäße Pulver kann bevorzugt einen Anteil an Natrium von < 5 ppm und an Chlor von < 20 ppm aufweisen. Die genannnten Elemente sind in der Regel beim chemisch-mechanischen Polieren nur in geringen Mengen tolerierbar.
Weiterhin kann für Polieranwendungen eine BET-Oberfläche des erfindungsgemäßen Pulvers von 30 bis 100 $m^2/g$ bevorzugt und von 40-80 $m^2/g$ besonders bevorzugt sein.
Ein weiterer Gegenstand der Erfindung ist ein Verfahren zur Herstellung eines Carbonatgruppen aufweisenden Ceroxid-Pulvers, bei dem man

- ein Aerosol in einem Reaktionsraum bei einer Reaktionstemperatur von 600°C bis 1500°C, bevorzugt 900°C bis 1200°C, mit einem sauerstoffenthaltenden Gas zur Reaktion bringt, das Reaktionsgemisch abkühlt und anschließend das Pulver von den gasförmigen Stoffen mittels eines Filters abtrennt, wobei
- das Aerosol durch Zerstäuben wenigstens einer Lösung enthaltend ein organisches Lösungsmittel oder Lösungsmittelgemisch und darin gelöst eine oxidierbare, organische Cer-III-Verbindung mit wenigstens einem Zerstäubungsgas erhalten wird,
- der volumenbezogene, mittlere Tropfendurchmesser $D_{30}$ des Aerosols 30 bis 100 $\mu m$ und die mittlere Verweilzeit

im Reaktionsraum 0,1 s bis 5 s ist,
und wobei

- man das Reaktionsgemisch nach Verlassen des Reaktionsraumes durch Eindüsen von Wassertröpfchen abkühlt,
- die Wassertröpfchen einen mittleren, volumenbezogenen Tröpfchendurchmesser von weniger als 100 μm aufweisen und
- zur Erzeugung der Wassertröpfchen Wasser in einer Menge gemäß Formel I zugegeben wird

$$m_{H2O} = [cp_{fl} * (T_s - T_0) + dh_v + cp_g * (T_e - T_s)]/3600 * Q \quad (I)$$

mit

- Q = Gesamtverbrennungsenthalpie aller Einsatzstoffe in KW
- $m_{H2O}$ = benötigte Menge $H_2O$ in kg/h zum Erzielen der Endtemperatur $T_e$
- $T_0$ = Eingangstemperatur Wasser
- $T_s$ = Siedetemperatur Wasser bei 1 bar
- $T_e$ = Endtemperatur
- $dh_v$ = Verdampfungsenthalpie Wasser
- $cp_{fl}$ = Wärmekapazität Wasser bei 50°C
- $cp_g$ = Wärmekapazität Wasserdampf bei 150°C,
mit
- $T_0$ = 5 - 50°C, $T_s$ = 100°C, $T_e$ = 200 - 400°C, $dh_v$ = 2256, 7 kJ/kg, $cp_{fl}$ = 4,181 kJ/kg*K und $cp_g$ = 1,98 kJ/kg*K ist.

Das sauerstoffenthaltende Gas ist in der Regel Luft oder mit Sauerstoff angereicherte Luft.

Als Zerstäubungsgas kann bei dem erfindungsgemäßen Verfahren ein reaktives Gas wie Luft, mit Sauerstoff angereicherte Luft und/oder ein inertes Gas wie Stickstoff eingesetzt werden. In der Regel wird Luft als Zerstäubungsgas eingesetzt. Das Verhältnis Durchsatz der Cer-III-Lösung / Zerstäubungsgasmenge bevorzugt 0,1 bis 25 kg/$Nm^3$ und besonders bevorzugt 0,5 bis 5 kg/$Nm^3$ sein kann. Zum Zerstäuben eignen sich besonders ein oder mehrere Zwei- oder Mehrstoffdüsen. Der Zerstäubungsdruck beträgt in der Regel 1 bis 100 bar.

In einer bevorzugten Ausführungsform des erfindungsgemäßen Verfahrens wird dem Reaktionsgemisch zusätzlich ein Brenngas zugeführt. Als Brenngase sind vor allem Wasserstoff, Methan, Ethan, Propan, Butan, Erdgas geeignet. Die Menge an zugeführtem Brenngas richtet sich in erster Linie nach der Menge an der zugeführten die Cer-III-Verbindung enthaltenden Lösung, deren Zusammensetzung und Brennwert. In der Regel beträgt das Verhältnis Brenngas/Lösung zwischen 0,1 uns 2 $Nm^3$/kg.

Weiterhin kann es vorteilhaft sein, wenn zusätzlich Sekundärluft in den Reaktionsraum eingeleitet wird. In der Regel wird die Menge an Sekundärluft so bemessen sein, dass das Verhältnis von Sekundärluft zu Primärluft 0,1 bis 10 ist.

Bevorzugterweise kann das erfindungsgemäße Verfahren so ausgeführt werden, dass der Sauerstoffanteil der eingebrachten Menge des sauerstoffenthaltenden Gases höher ist als zur vollständigen Umsetzung der Cer-III-Verbindung und des Brenngases nötig ist. Es ist besonders vorteilhaft, wenn lambda ≥ 1,5 ist, wobei sich lambda errechnet aus Summe Sauerstoffanteil (Luft + ggf. Zerstäubungsgas) / Summe (Cer-III-Verbindung + Brenngas), jeweils in mol/h. Ganz besonders bevorzugt kann 2 < lambda < 5 sein.

Als organische Cer-III-Verbindungen können insbesondere Cer-Alkoholate und/oder Cer-Carboxylate eingesetzt werden. Als Alkoholate können bevorzugt Ethylate, n-Propylate, iso-Propylate, n-Butylate und/oder tert.-Butylate eingesetzt werden. Als Carboxylate können die der Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure und/oder Laurinsäure zugrundeliegenden Verbindungen eingesetzt werden. Besonders vorteilhaft können 2-Ethlyhexanoate und/oder Laurate eingesetzt werden.

Als organische Lösungsmittel, beziehungsweise als Bestandteil von organischen Lösungsmittelgemischen, können bevorzugt Alkohole wie Methanol, Ethanol, n-Propanol, isoPropanol, n-Butanol oder tert.-Butanol, Diole wie Ethandiol, Pentandiol, 2-Methyl-2,4-pentandiol, Dialkylether wie Diethylether, tert.-Butyl-methylether oder Tetrahydrofuran, $C_1$-$C_{12}$-Carbonsäuren wie beispielsweise Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure, Laurinsäure sein. Weiterhin können Essigsäureethylester, Benzol, Toluol, Naphtha und/oder Benzin eingesetzt werden. Bevorzugt können Lösungen eingesetzt werden, die $C_2$-$C_{12}$-Carbonsäuren enthalten, insbesondere 2-Ethylhexansäure und/oder Laurinsäure.

Ein weiterer Gegenstand der Erfindung ist ein Carbonatgruppen aufweisendes Ceroxid-Pulver, welches gemäß dem erfindungsgemäßen Verfahren erhältlich ist.

Ein weiterer Gegenstand der Erfindung ist eine Dispersion enthaltend das Carbonatgruppen aufweisende

Ceroxid-Pulver gemäß der Erfindung.

Die flüssige Phase der Dispersion kann Wasser, ein oder mehrere organische Lösungsmittel oder eine wässerige/organische Kombination sein, wobei die Phasen vorzugsweise mischbar sind. Die Dispersion kann weiterhin pH-Wert-Regulatoren, oberflächenaktive Additive und/oder Konservierungsstoffe enthalten. Eine Dispersion mit oberflächenaktiven Additive ist jedoch nicht vorteilhaft. Stattdessen ist eine Dispersion vorteilhaft, welche nur aus dem Carbonatgruppen aufweisenden Ceroxid-Pulver, Wasser und gegebenenfalls einem pH-Wert-Regulator besteht.

Der Gehalt an Carbonatgruppen enthaltendem Ceroxid-Pulver kann bevorzugt 0,5 bis 60 Gew.-% betragen. Besonders bevorzugt ist eine wässerige Dispersion enthaltend 20 bis 50 Gew.-%, insbesondere 35 bis 45 Gew.-% des erfindungsgemäßen Pulvers. Weiterhin kann eine erfindungsgemäße, wässerige Dispersion bevorzugt sein, die eine Viskosität von < 30 mPas und besonders bevorzugt von < 20 mPas, bei einer Konzentration des Pulvers bis 40 Gew.-% und einer Temperatur von 23°C in einem Scherratenbereich von 1 bis 1000 $s^{-1}$ aufweist.

Der pH-Wert einer erfindungsgemäßen, wässerigen Dispersion liegt bevorzugt in einem Bereich von 3 bis 8. Zur Lagerung der Dispersion wird gewöhnlich ein pH-Wert von 3 bis 4 durch Zugabe einer Säure eingestellt. Besonders geeignet hierfür ist Salpetersäure. Die Stabilität der Dispersion ist in diesem pH-Bereich besonders hoch.

Bei Verwendung einer wässerigen Dispersion als Poliermittel kann dann zum Beispiel mittels Ammoniak oder Kalilauge ein pH-Wert von 7 bis 8 eingestellt werden. In diesem Bereich zeigt die Dispersion, auch ohne Gegenwart oberflächenaktiver Additive, eine ausreichende Stabilität.

Speziell für Polierprozesse eignet sich eine Dispersion deren mittels dynamischer Lichtstreuung ermittelte mittlere Partikelgröße $d_{50}$ kleiner als 120 nm, insbesondere kleiner als 100 nm, ist.

Weiterhin ist für diesen Zweck eine Dispersion geeignet, deren mittels dynamischer Lichtstreuung ermittelte mittlere Partikelgröße $d_{90}$ kleiner als 200 nm, insbesondere kleiner als 150 nm, ist.

Das Zeta-Potential der erfindungsgemäßen Dispersion kann bevorzugt mindestens 20 mV, insbesondere größer als 30 mV, sein.

Die erfindungsgemäße Dispersion kann mit denen dem Fachmann bekannten Dispergieraggregaten hergestellt werden. Dies können beispielsweise Rotor-Stator-Maschinen, Hochenergiemühlen bei denen sich die Partikel durch Kollision miteinander vermahlen, Planetenkneter, Rührwerkskugelmühlen, als Rüttelaggregat arbeitende Kugelmühlen, Rüttelplatten, Ultraschallaggregate oder Kombinationen der vorgenannten Aggregate sein.

**Beispiele:**

Die spezifische Oberfläche wird bestimmt nach DIN 66131.

Die Oberflächeneigenschaften werden durch großflächige (1 $cm^2$) XPS/ESCA-Analyse (XPS = Röntgen-Photoelektronen-Spektroskopie; ESCA = Electron Spectroscopy for Chemical Analysis) ermittelt. Die Auswertung beruht auf den allgemeinen Empfehlungen gemäß DIN-Fachbericht No. 39, DMA(A)97 des National Physics Laboratory, Teddington, U.K, und den bisherigen Erkenntnissen zur entwicklungsbegleitenden Normung des Arbeitsauschusses "Oberflächen- und Mikrobereichsanalysen" NMP816(DIN). Zudem werden die jeweils vorliegenden Vergleichsspektren aus der Fachliteratur berücksichtigt. Die Werte werden durch Untergrundsubtraktion, unter Berücksichtigung der relativen Empfindlichkeitsfaktoren der jeweils angegebenen Elektronenniveaus errechnet. Die Angabe erfolgt in Flächenprozent. Die Genauigkeit ist mit +/- 5% relativ zu veranschlagen.

Das Zeta-Potentials wird im pH-Bereich 3-12 mittels der Elektrokinetischen Schallamplitude (ESA) bestimmt. Dazu wird eine Suspension mit 1 % Ceroxid hergestellt. Die Dispergierung erfolgt mit einem Ultraschall-Stab (400 W). Die Suspension wird mit einem Magnetrührer gerührt und über eine Schlauchpumpe durch den PPL-80 Sensor des ESA-8000 Geräts der Firma Matec gepumpt.Vom Ausgangs-pH-Wert startet die potentiometrische Titration mit 5m NaOH auf pH 12 . Die Rücktitration auf pH 4 wird mit 5m $HNO_3$ vorgenommen.Die Auswertung erfolgt mittels der Gerätesoftware Version pcava 5.94.

$$\zeta = \frac{ESA \cdot \eta}{\phi \cdot \Delta\rho \cdot c \cdot |G(\alpha)| \cdot \varepsilon \cdot \varepsilon_r}$$

mit

| | |
|---|---|
| $\zeta$ | Zetapotential |
| $\phi$ | Volumenfraktion |
| $\Delta\rho$ | Dichtedifferenz zwischen Partikel und Flüssigkeit |
| c | Schallgeschwindigkeit in der Suspension |

η Viskosität der Flüssigkeit
ε Dielektrizitätskonstante der Suspension
|G(α)| Trägheitskorrektur

Die Dispersionen werden durch Ultraschallbehandlung mit einem Ultraschallfinger (Fa. Bandelin UW2200/DH13G), Stufe 8, 100%; 5 Minuten) in Wasser hergestellt. Die mittleren Aggregatdurchmesser werden mit einem Partikelgrößen-Analysator LB-500, Fa. Horiba bestimmt.

**Beispiel 1:**

Aus 250 kg/h einer Lösung, bestehend aus 50 Gew.-% Cer(III)ethylhexanoat und 50 Gew.-% 2-Ethylhexansäure (Brennwert der Lösung 29 KJ/kg), und 50 $Nm^3/h$ Zerstäubungsluft werden mittels einer Zweistoffdüse (Fa. Schlick) ein Aerosol erzeugt, welches in einen Reaktionsraum zerstäubt wird. Hier brennt eine Knallgasflamme aus Wasserstoff (40 $Nm^3/h$) und Primärluft (1800 $Nm^3/h$), in der das Aerosol zur Reaktion gebracht wird. Zusätzlich wird Sekundärluft (3200 $Nm^3/h$) in den Reaktionsraum eingebracht. Die Verweilzeit in der Flamme beträgt ca. 20 ms. Die Temperatur 0,5 m unterhalb der Flamme beträgt 1100°C.

Nachfolgend wird ein Aerosol, erzeugt aus 900 kg/h Wasser mit einer Eingangstemperatur von 20°C und 200 $Nm^3/h$ Zerstäubungsluft mittels einer Zweistoffdüse, in den Reaktionsraum eingedüst. Das feste Produkt wird an einem Filter von gasförmigen Stoffen abgetrennt. Das Reaktionsgemisch weist zu diesem Zeitpunkt eine Temperatur von 280°c auf. Die Verweilzeit des Reaktionsgemisches im Reaktionsraum beträgt 1 s.

Die Beispiele 2 bis 4 werden analog Beispiel 1 durchgeführt, wobei die Einsatzmengen und andere Verfahrensparameter der Tabelle 1 zu entnehmen sind. Die analytischen Daten der erhaltenen Pulver sind der Tabelle 2 zu entnehmen.

Die Ergebnisse der XPS/ESCA-Analyse zeigen, dass sehr reine Oberflächen vorliegen. Außer Ce, C und O sind keine weiteren Elemente nachweisbar. Der Carbonat-C zeigt eine Bindungsenergie um 289 eV.

In Tabelle 2 sind weiterhin die $d_{50}$ und $d_{90}$ Werte der 1 prozentigen Dispersionen der Pulver der Beispiele 1 bis 4 wiedergegeben.

Die Teilchengrößenverteilung einer 5 prozentigen Dispersion mit dem Pulver aus Beispiel 3 in Wasser, deren pH-Wert mit $HNO_3$ auf 3,9 eingestellt wurde, liefert einen $d_{50}$-Wert von 82 nm und einen $d_{90}$-Wert von 103 nm.

Mit der erfindungsgemäßen Dispersion können $SiO_2$-Oberflächen poliert werden und Abtragsraten von > 500 nm/min, bevorzugt bis zu 1200 nm/min, insbesondere 1000 nm/min bei einem pv-Wert von 60000 N/ms erzielt werden.

Figur 1 und Figur 2 zeigen Polierresultate einer 0,5 prozentigen Dispersion mit dem Pulver aus Beispiel 3, deren pH-Wert mit KOH auf 7,6 eingestellt wurde.

Figur 1 zeigt die Abtragsrate, in nm/min, in Abhängigkeit von dem Produkt aus Anpressdruck und Geschwindigkeit, in N/ms.

Es wurde außerdem festgestellt, dass die beim Polieren von $SiO_2$ und $Si_3N_4$ gemessenen Motorströme voneinander abweichen, wenn die erfindungsgemäße Dispersion eingesetzt wird. Dies kann bei der sogenannten STI (Shallow Trench Isolation) vorteilhaft genutzt werden. Ziel bei STI ist es, möglichst selektiv $SiO_2$ zu polieren und bei Erreichen des Nitridschicht den Poliervorgang zu stoppen. Es ist bekannt, hierzu einer Dispersion Additive hinzuzufügen, die diese Selektivität erhöhen, indem sie das Nitrid schützen. Überraschenderweise sind diese Additive bei der erfindungsgemäßen Dispersion nicht notwendig.

Figur 2 zeigt den Motorstrom in Abhängigkeit von der Zeit in s für $SiO_2$ und $Si_3N_4$.

**Tabelle 1: Einsatzmengen und Einstellungen**

| **Beispiel** | | **1** | **2** | **3** | **4** |
|---|---|---|---|---|---|
| Cer-III-Lösung | kg/h | 250 | 2,5 | 12 | 14 |
| Zerstäuberluft* | $Nm^3/h$ | 50 | 3 | 20 | 20 |
| | | | | | |
| Wasserstoff | $Nm^3/h$ | 40 | 2 | 4 | 4,5 |
| Primärluft | $Nm^3/h$ | 1800 | 10 | 110 | 110 |
| Sekundärluft | $Nm^3/h$ | 3200 | 25 | 160 | 160 |
| Gesamtluft | $Nm^3/h$ | 5050 | 28 | 290 | 290 |
| Gesamtsauerstoff | $Nm^3/h$ | 1058 | 5,86 | 60 | 60 |

(fortgesetzt)

| Beispiel | | 1 | 2 | 3 | 4 |
|---|---|---|---|---|---|
| Lambda | | 2,7 | 3 | 3 | 2,6 |
| Temperatur** | °C | 1100 | 1110 | 1060 | 1055 |
| Verweilzeit | s | 1 | 1,4 | 0,9 | 0,95 |
| | | | | | |
| Wasser | kg/h | 900 | 10 | 100 | 110 |
| Zerstäuberluft*** | $Nm^3/h$ | 200 | 5 | 30 | 50 |
| Temperatur $T_0$ | °C | 20 | 20 | 20 | 20 |
| Temperatur $T_e$ | °C | 280 | 310 | 300 | 290 |
| *) Cer-III-Lösung; **) 500mm unter Flamme, ***) Wasser | | | | | |

**Tabelle 2: Analytische Werte der erfindungsgemäßen Pulver**

| Beispiel | | 1 | 2 | 3 | 4 |
|---|---|---|---|---|---|
| BET | $m^2/g$ | 120 | 60 | 58 | 25 |
| $CeO_2$* | Gew.-% | 99,85 | 99,79 | 99,82 | 99,8 |
| C | Gew.-% | 0,12 | 0,14 | 0,1 | 0,15 |
| Zeta-Potential** | mV | 41 | 48 | 52 | 46 |
| IEP*** | pH | 9 | 9,6 | 10,6 | 9,8 |
| C 1s**** | F1.-% | 28, 7/26, 4 | 19, 0/11, 2 | 15, 2/5, | 9 27, 4/11, 8 |
| $d_{50}$ | nm | 105 | 110 | 114 | 110 |
| $d_{90}$ | nm | 175 | 185 | 198 | 180 |
| *) in allen Beispielen: Na<5 ppm; Cl<20 ppm; **) bei pH = 4, ***) IEP = isoelektrischer Punkt; ****) wie synthetisiert/gesputtert; gesputtert: nach Abtragen der Oberfläche durch Beschuß mit Argonionen, 5 keV, ca. 10 min | | | | | |

**Patentansprüche**

1. Carbonatgruppen aufweisendes Ceroxid-Pulver aus kristallinen Primärpartikeln, die Ceroxid und auf ihrer Oberfläche und in einer oberflächennahen Schicht Carbonatgruppen enthalten, wobei

   - das Pulver eine BET-Oberfläche von 25 bis 150 $m^2/g$ besitzt,
   - die Primärpartikel einen mittleren Durchmesser von 5 bis 50 nm aufweisen,
   - die oberflächennahe Schicht der Primärpartikel eine Tiefe von ca. 5 nm aufweist,
   - in der oberflächennahen Schicht die Carbonatkonzentration ausgehend von der Oberfläche, auf der die Carbonatkonzentration am höchsten ist, nach innen abnimmt,
   - der von den Carbonatgruppen herrührende Kohlenstoffgehalt auf der Oberfläche 5 bis 50 Flächenprozent beträgt und in der oberflächennahen Schicht in einer Tiefe von ca. 5 nm 0 bis 30 Flächenprozent beträgt.
   - der Gehalt an Ceroxid, gerechnet als $CeO_2$ und bezogen auf das Pulver, mindestens 99,5 Gew.-% beträgt und
   - der Gehalt an Kohlenstoff, umfassend organischen und anorganischen Kohlenstoff, 0,01 bis 0,3 Gew.-%, bezogen auf das Pulver, beträgt.

2. Carbonatgruppen aufweisendes Ceroxid-Pulver nach Anspruch 1, **dadurch gekennzeichnet, dass** die Primärpartikel aggregiert sind.

3. Carbonatgruppen aufweisendes Ceroxid-Pulver nach den Ansprüchen 1 oder 2, **dadurch gekennzeichnet, dass**

der Anteil an Natrium < 5 ppm und an Chlor < 20 ppm ist.

**4.** Carbonatgruppen aufweisendes Ceroxid-Pulver nach den Ansprüchen 1-3, **dadurch gekennzeichnet, dass** die BET-Oberfläche 30 bis 100 $m^2/g$ ist.

**5.** Verfahren zur Herstellung eines Carbonatgruppen aufweisenden Ceroxid-Pulvers, bei dem man

- ein Aerosol in einem Reaktionsraum bei einer Reaktionstemperatur von 600°C bis 1500°C, bevorzugt 900°C bis 1200°C, mit einem sauerstoffenthaltenden Gas zur Reaktion bringt, das Reaktionsgemisch abkühlt und anschließend das Pulver von den gasförmigen Stoffen mittels eines Filters abtrennt, wobei
- das Aerosol durch Zerstäuben wenigstens einer Lösung enthaltend ein organisches Lösungsmittel oder Lösungsmittelgemisch und darin gelöst eine oxidierbare, organische Cer-III-Verbindung mit wenigstens einem Zerstäubungsgas erhalten wird,
- der volumenbezogene, mittlere Tropfendurchmesser $D_{30}$ des Aerosols 30 bis 100 µm und die mittlere Verweilzeit im Reaktionsraum 0,1 s bis 5 s ist,

**dadurch gekennzeichnet, dass**

- man das Reaktionsgemisch nach Verlassen des Reaktionsraumes durch Eindüsen von Wassertröpfchen abkühlt,
- die Wassertröpfchen einen mittleren, volumenbezogenen Tröpfchendurchmesser von weniger als 100 µm aufweisen und
- zur Erzeugung der Wassertröpfchen Wasser in einer Menge gemäß Formel I zugegeben wird

$$m_{H2O} = [cp_{fl} * (T_s - T_0) + dh_v + cp_g * (T_e - T_s)]/3600 * Q \quad (I)$$

mit
- Q = Gesamtverbrennungsenthalpie aller Einsatzstoffe in KW
- $m_{H2O}$ = benötigte Menge $H_2O$ in kg/h zum Erzielen der Endtemperatur $T_e$
- $T_0$ = Eingangstemperatur Wasser
- $T_s$ = Siedetemperatur Wasser bei 1 bar
- $T_e$ = Endtemperatur
- $dh_v$ = Verdampfungsenthalpie Wasser
- $cp_{fl}$ = Wärmekapazität Wasser bei 50°C
- $cp_g$ = Wärmekapazität Wasserdampf bei 150°C,

wobei

- $T_0$ = 5 - 50°C, $T_s$ = 100°C, $T_e$ = 200 - 400°C, $dh_v$ = 2256, 7 kJ/kg, $cp_{fl}$= 4,181 kJ/kg*K und $cp_g$ = 1,98 kJ/kg*K ist.

**6.** Verfahren nach Anspruch 5, **dadurch gekennzeichnet, dass** dem Reaktionsgemisch zusätzlich ein Brenngas zugeführt wird.

**7.** Verfahren nach den Ansprüchen 5 oder 6, **dadurch gekennzeichnet, dass** lambda ≥ 1,5 ist, wobei sich lambda errechnet aus Summe Sauerstoffanteil (Luft + ggf. Zerstäubungsgas)/Summe (Cer-III-Verbindung + Brenngas), jeweils in mol/h.

**8.** Carbonatgruppen aufweisendes Ceroxid-Pulver erhältlich nach den Ansprüchen 5-7.

**9.** Dispersion enthaltend das Carbonatgruppen aufweisende Ceroxid-Pulver gemäß der Ansprüche 1-4 oder 8.

**10.** Dispersion nach Anspruch 9, **dadurch gekennzeichnet, dass** deren Bestandteile das Carbonatgruppen aufweisende Ceroxid-Pulver, Wasser und gegebenenfalls ein pH-Wert-Regulator sind.

**11.** Dispersion nach den Ansprüchen 9 oder 10, **dadurch gekennzeichnet, dass** der Gehalt an Ceroxid-Pulver 0,5 bis 60 Gew.-% beträgt.

**12.** Dispersion nach den Ansprüchen 9-11, **dadurch gekennzeichnet, dass** der pH-Wert 3 bis 8 beträgt.

**13.** Dispersion nach den Ansprüchen 9-12, **dadurch gekennzeichnet, dass** die mittels dynamischer Lichtstreuung ermittelte mittlere Partikelgröße $d_{50}$ kleiner als 120 nm ist.

**14.** Dispersion nach den Ansprüchen 9-13, **dadurch gekennzeichnet, dass** die mittels dynamischer Lichtstreuung ermittelte mittlere Partikelgröße $d_{90}$ kleiner als 200 nm ist.

**15.** Dispersion nach den Ansprüchen 9-14, **dadurch gekennzeichnet, dass** deren Zeta-Potential mindestens 20 mV ist.

**16.** Verwendung des Carbonatgruppen aufweisenden Ceroxid-Pulvers gemäß der Ansprüche 1-4 oder 8 oder der Dispersion gemäß der Ansprüche 9-15 zum chemisch-mechanischen Polieren.

**17.** Verwendung des Carbonatgruppen aufweisenden Ceroxid-Pulvers gemäß der Ansprüche 1-4 oder 8 als Katalysator, als UV-Absorber, als Tonerbestandteil und als Bestandteil von Brennstoffzellen.

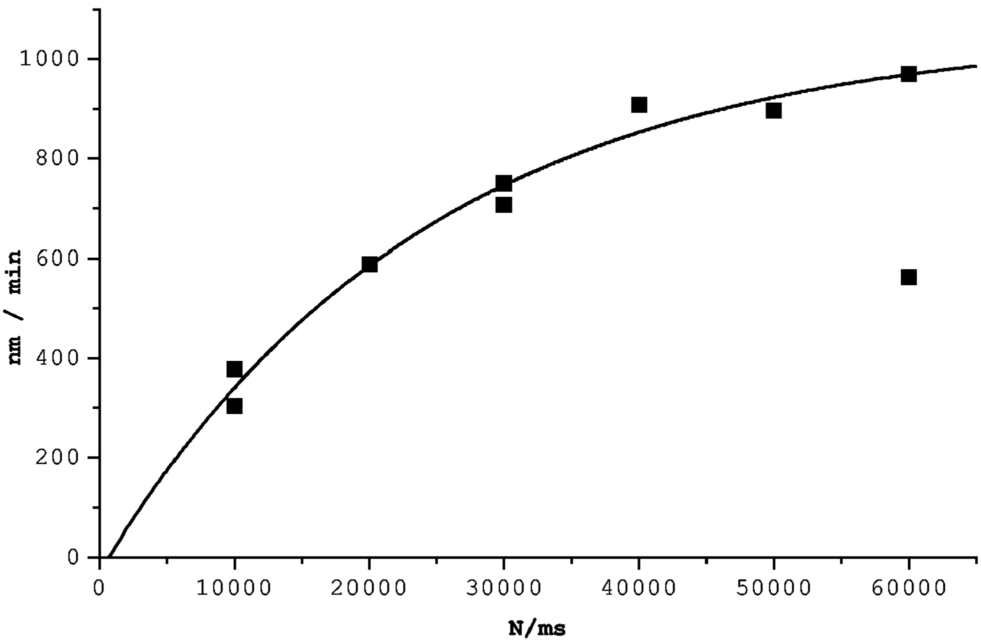


Figur 1

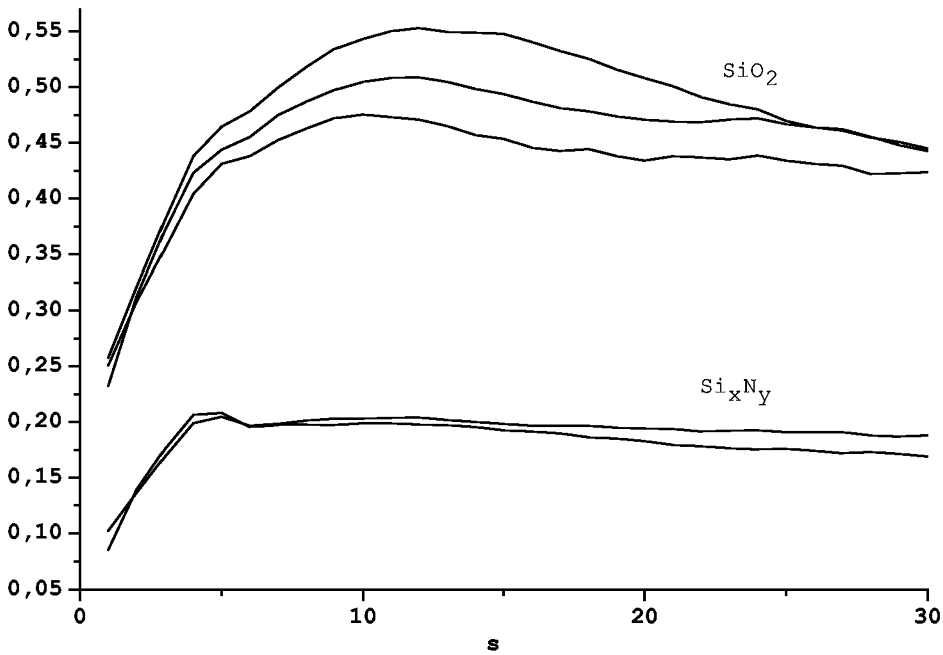


Figur 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5389352 A
- EP 1142830 A
- WO 2004005184 A1
- WO 0136332 A1
- DE 10251029 A
- EP 1506940 A
- EP 1203801 A
- EP 133080 A
- DE 10342826 B
- US 6827752 B
- US 6443811 B
- US 6420269 B


### In der Beschreibung aufgeführte Nicht-Patentliteratur


- **PRATSINIS et al.** *J. Mater. Res.,* 2002, vol. 17, 1356-1362